# EUROPÄISCHE PATENTANMELDUNG

(11) **EP 1 186 858 A1**
(43) Veröffentlichungstag der Anmeldung: **13.03.2002**
(21) Anmeldenummer: 00119619.5
(22) Anmeldetag: 08.09.2000
(51) Int. Cl.: G01C 9/06, G01C 9/36

(54) **Elektronisches Inclinometer**

(71) Anmelder: Prüftechnik Dieter Busch AG, 85737 Ismaning (DE)
(72) Erfinder: Busch, Dieter, 85737 Ismaning (DE); Hermann, Michael, 78050 Villingen-Schwenningen (DE)

(57) **Zusammenfassung**

Das zweidimensional wirkende Inclinometer mit sehr hoher Empfindlichkeit enthält folgende Komponenten: eine Beleuchtungsvorrichtung, definierte Volumina einer ersten und einer zweiten Substanz (Fluide), welche beweglich in einem Gefäss eingeschlossen sind, und einen zweidimensional auslesbaren optoelektronischen Sensor. Die fluidischen Volumina sind unvermischbar und können unterschiedliche spez. Gewichte und unterschiedliche Brechungsindizes aufweisen. Lokal unterschiedliche Beleuchtungsstärken auf dem opt. Sensor werden dazu benutzt, ein Schwerpunktsmass für dessen Beleuchtung zu bestimmen. Mit den auf diese Weise gefundenen Koordinaten, welche ggf. einem Linearisierungsverfahren unterzogen werden, wird die aktuelle Ausrichtung des Inclinometers relativ zur Senkrechten ermittelt. Das Inclinometer wird bevorzugt bei der Ausrichtung von Walzen bei der Papier-, Film oder Blechherstellung eingesetzt.

## Beschreibung

Die Erfindung betrifft ein elektronisches Inclinometer. Ein solches ist bekannt aus der DE 33 20 303 A1. Das genannte Inclinometer ist als Lagemelder für eine endliche Anzahl anzeigbarer Positionswerte vorgesehen.

Mit den Inclinometern der gattungsgemässen Art kann jedoch nur eine Abweichung von der Senkrechten nach einer einzigen Winkelkoordinate ermittelt werden.

Es ist Aufgabe der Erfindung, ein kostengünstiges Inclinometer zu schaffen, welches sich durch sehr hohe Winkelauflösung auszeichnet und das die Orientierung eines Körpers relativ zur Senkrechten nach zwei Winkelkoordinaten ermitteln kann.

Diese Aufgabe wird dadurch gelöst, dass das erfindungsgemässe Inclinometer zur gleichzeitigen Bestimmung eines ersten und eines zweiten Neigungswinkels relativ zu einer Senkrechten folgende Merkmale aufweist:
- es ist eine Beleuchtungsvorrichtung vorhanden
- es ist ein zweidimensional auslesbarer optoelektronischer Positionsdetektor vorhanden, mit festen Abständen gegenüber der Beleuchtungseinrichtung
- es ist entweder eine zweidimensional wirkende Abschattungsvorrichtung oder (alternativ) eine Fokussierungseinrichtung vorhanden, welche jeweils feste Abstände gegenüber der Beleuchtungseinrichtung und dem Positionsdetektor aufweisen
- die Abschattungs- oder Fokussierungseinrichtung weist transparente oder reflektierende Deck- und/oder Bodenschichten auf, von denen mindestens eine gewölbt ist und insbesondere eine sphärische Wölbung aufweist
- innerhalb der Abschattungs- oder Fokussierungseinrichtung befinden sich unvermischbare Volumina eines ersten und eines zweiten Fluids, welche sich in ihrer Dichte (spezif. Gewicht) unterscheiden und welche in vordefinierter Weise nach Massgabe einer aktuellen räumlichen Orientierung des Inclinometers relativ zu einem Schwerkrafts- oder Beschleunigungsvektor unterschiedliche Positionen einnehmen können
- die Abschattungs- oder Fokussierungseinrichtung bewirkt in Abhängigkeit einer aktuellen räumlichen Orientierung des Inclinometers relativ zu einem Schwerkrafts- oder Beschleunigungsvektor örtlich variable Beleuchtungsstärken auf dem durch die Beleuchtungseinrichtung beleuchteten Positionsdetektor.

### Gemäss der Erfindung ist folgendes vorgesehen:

Eine hochgenaue konvexe und bevorzugt kugelkalottenförmige Oberfläche dient als Anlage für gasförmige oder flüssige Volumina sowohl einer ersten als auch einer zweiten Substanz. Die erste Substanz befindet sich dabei unvermischbar angelagert an ein Volumen einer zweiten Substanz . Die Dichten der ersten und der zweiten Substanz sind unterschiedlich, und das Volumen der ersten Substanz sei beispielsweise geringer als das der zweiten Substanz. Durch Schwerkrafteinfluss kann sich die Substanz (in Form eines Fluids, d.h. Flüssigkeit oder Gasvolumen) mit dem geringeren spezifischen Gewicht als annähernd schicht- oder linsenförmiges Fluid-Volumen oberhalb der anderen Substanz ansammeln, sofern keine weiteren Kräfte eine solche Schichtung verhindern oder stören. Das schicht- oder linsenförmige Fluid-Volumen erhält durch seine schwerkraftbedingte Anlage an die genannte kugelkalottenförmige Oberfläche eine Form mit gewölbten Oberflächen und kurvenförmige Berandungen, durch welche zumindest angenähert ein optisches Element wie z.B. eine Blende, eine Linse, gewölbte Spiegel, oder eine Kombination aus solchen Elementen, definiert werden können. Eine Verwendung der genannten schicht- oder linsenförmigen Volumina, welche sich an energetisch günstigster Stelle an einem höchst erreichbaren Bereich innerhalb vorgegebener Begrenzungsflächen positionieren, ist für gewisse visuell zu beobachtende Indikatoren bekannt. Diese werden als zweidimensional wirkende Wasserwaagen benutzt. Diese Wasserwaagen können aber nur bedingt als optisches Element bezeichnet werden.
In einer anderen Ausführungsform der Erfindung kann sich die Substanz mit dem grösseren spezifischen Gewicht als annähernd schicht- oder linsenförmiges Fluid-volumen unterhalb der anderen Substanz ansammeln. Gemäss der Erfindung kann die Substanz mit dem grösseren spezifischen Gewicht eine geringere optische Dichte aufweisen als die Substanz mit dem kleineren spezifischen Gewicht.
Gemäss der Erfindung wird eins der beschriebenen schicht- oder linsenförmigen Fluid-Volumina in optische Wirkverbindung mit einem zweidimensional wirkenden flächigen optischen Sensor gebracht.

Gemäss der Erfindung kann das schicht- oder linsenförmige Fluid-Volumen nicht nur geringe optische Dichte (d.h. gute Transmissionseigenschaften) aufweisen, sondern anstelle dessen auch eine hohe optische Dichte aufweisen. Das schicht- oder linsenförmige Fluid-Volumen ist beweglich und nimmt bei Abwesenheit von Störkräften seine Lage an einer energetisch günstigen Position ein. Diese Position kann insbesondere auch ein niedrigst erreichbarer Bereich innerhalb der vorgegebenen, durch Gefässdimensionen vordefinierte Begrenzungsflächen für die koexistierende Anordnung (Gemenge) aus der genannten ersten und zweiten Substanz bzw. Fluid sein. Ein niedrigst, wie auch ein höchst erreichbarer Bereich hängt dabei davon ab, wie das Gefäss im Raum orientiert ist, d.h. normalerweise relativ zur Richtung der Schwerkraft, sofern keine weiteren Beschleunigungsvektoren auf das Gefäss einwirken.

Gemäss der Erfindung wird weiterhin eine fest zum genannten Gefäss beabstandete Beleuchtungsvorrichtung vorgesehen, mit der der genannte flächige optische Sensor beleuchtet werden kann. Eine unterschiedliche Lichtverteilung auf dem Sensor wird dadurch bewirkt, dass das genannte schicht- oder linsenförmige Fluid-Volumen seine Position innerhalb des umschliessenden Gefässes verändert. Das schicht- oder linsentörmige Fluid-Volumen kann dabei eher als Lochblende wirksam werden, oder als scheibenförmige Blende mit lichtabschwächender Wirkung. Die Veränderung der Lichtverteilung des beleuchteten flächigen optischen Sensors findet normalerweise dann statt, wenn das genannte vorgesehene Gefäss eine Drehung im Raum erfährt, wobei allerdings die Senkrechte als Drehachse ausgeschlossen wird.

Je nach Lichtverteilung auf dem optischen Sensor kann dieser z.B. einen zu einer beleuchteten Fläche gehörigen Schwerpunkt oder andere zweidimensionale Kennwerte der Beleuchtungsintensität ermitteln. Ein solcher anderer Kennwert kann zum Beispiel der Schwerpunkt einer vom optischen Sensor erfassten Kurve gleicher Lichtintensität (Isophote) sein. Die Kennwerte werden sodann dazu verwendet, die winkelmässige Lage des Inclinometers bestehend aus Gefäss, optischem Sensor und Beleuchtungseinrichtung mit höchster Genauigkeit nach zwei Koordinaten zu bestimmen. In diesem Zusammenhang kann vorgesehen werden, die ermittelten Kennwerte zum Beispiel anhand einer in einem zugehörigen Computer hinterlegten digitalen Korrekturtabelle zu linearisieren, so dass eine genaue Ubereinstimmung von aktueller Orientierung des Inklinometers und ausgegebenen Messwerten bereitstellbar ist.
Gemäss der Erfindung kann gleichzeitung mit der Bestimmung eines Positions-Kennwertes für eine heller beleuchtete Fläche ein Positions-Kennwert für die komplementäre, weniger hell beleuchtete Fläche bestimmt werden. Auf diese Weise ist eine Kontrolle des Messvorganges möglich, da der Mittelwert aus beiden Positions-Kennwerten eine annähernd konstante zweidimensionale Grösse darstellen sollte.
Bei der erfindungsgemässen Vorrichtung wird es bevorzugt, eine Kombination der folgenden Fluide zu verwenden (geordnet nach spezif. Gewicht): Luft, Stickstoff, Alkohol, Freon, Silikonöl, Mineralöl, Wasser, Quecksilber.

Die Erfindung wird im folgenden anhand der Zeichnung erläutert.

Es zeigt
Fig. 1 eine erste Querschnittsdarstellung, mit Lichtwegen in einem symmetrischen Fall
Fig. 2 eine zweite Querschnittsdarstellung, mit Lichtwegen für einen asymmetrischen Fall
Fig. 3 eine dritte Querschnittsdarstellung, mit einem untenliegenden und ggf. mit einem Reflektor betriebenen optoelektronischen Positionsdektektor

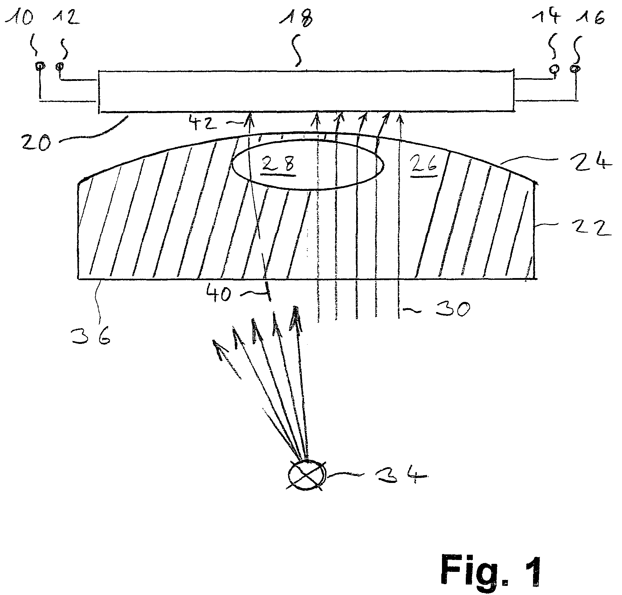

Die in Fig. 1 gezeigt Anordnung zeigt die querschnittsmässige Anordnung einer Beleuchtungseinrichtung 34, eines zweidimensional wirkenden, d.h. auslesbaren, optoelektronischen Sensors 18 und dessen symbolisierte Anschlusseinrichtungen 10, 12, 14, 16. Optisch zwischengeschaltet ist ein Gefäss 22 mit transparenten Deck- und Bodenflächen 24, 36. Die Deckfläche 24 ist sphärisch gewölbt und weist bevorzugt einen Krümmungsradius von etwa 0,50 m bis 20 m auf. Sensor 18, Gefäss 22 und Beleuchtungseinrichtung 34 sind fest zueinander orientiert und beabstandet. Innerhalb des Gefässes 22 befindet sich eine Kombination von im wesentlichen nicht mischbaren Fluiden, z.B. ein linsenförmiges Fluid-Volumen 28, dessen Dichte geringer ist als die des umgebenden, schwereren Fluid-Volumens 26. Fluid-Volumen 28 kann z.B. Luft sein und hat dann einen kleineren Brechungsindex als das umgebende Fluid-Volumen 26, welches z.B. aus einer Wasser/Alkohol-Mischung, oder aus einem Ol besteht. Fluid-Volumen 28 kann aber auch aus Ol bestehen, welches innerhalb einer wässrigen Lösung 28 schwimmt. In diesem Fall ist es möglich, dass Fluid-Volumen 28 im Vergleich zu Fluid-Volumen 26 einen grösseren Brechungsindex aufweist.
Gemäss der Erfindung ist es vorteilhatt, für die gezeigte Darstellung einerseits ein gefärbtes, insbesondere stark grau gefärbtes Fluid-Volumen 26 und andererseits ein möglichst transparentes Fluid-Volumen 28 zu verwenden. Auf diese Weise kann bei einer orientierungsbedingten Bewegung des linsenförmigen Fluid-Volumens 28 besonders effektiv eine Verlagerung des Schwerpunktes der stärker beleuchteten Fläche auf Sensor 18 bewirkt werden. Die Beleuchtung mit einer punktförmigen Lichtquelle 34 ist beispielhaft zu verstehen. Wie durch Lichtstrahlen 30 ausgewiesen, ist auch eine Beleuchtung mit parallelem Licht möglich. - Weist das Fluid-Volumen 28 einen geringeren Brechungsindex (z.B. Luft-Brechungsindex) im Vergleich zu Fluid-Volumen 26 auf, so wirkt das linsenförmige Fluid-Volumen 28 nicht nur im Sinne einer Lochblende, sondern auch als Zerstreuungslinse. Dies wird an einzelnen Strahlen des Lichtstrahlbündels 30 gezeigt. Diese optische Auslegung kann eventuell dann von Vorteil sein, wenn der Sensor 18 als sog. CCD-Sensor oder als sog. CMOS-Sensor ausgestaltet ist, so dass Lichtwerte an einer Vielzahl flächig aneinandergeordneter Einzelsensoren erfassbar sind, und durch einen Lichtfleck mit effektiv grösserem Durchmesser eine bessere Mittelwertbildung für den gesuchten optischen Schwerpunkt durchgeführt werden kann.

Höhere wirksame Beleuchtungsintensitäten auf dem Sensor können dadurch erreicht werden, dass das linsenförmige Fluid-Volumen 28 mit einem höheren Brechungsindex ausgestattet wird, im Vergleich zum Fluid-Volumen 26.

Dies wird anhand des einzelnen Lichtstrahl 40 dargestellt. Alternativ ist es auch möglich, das Fluid-Volumen 28 stark zu färben, so dass die Wirkung einer Scheibenblende hervorgerufen wird, und die Wirkung einer Sammel- oder Zerstreuungslinse entfällt.

Die in Fig. 1 dargestellte Anordnung des opt. Sensors 18 oberhalb des Gefässes 22 ist nicht zwingend.

Vielmehr kann eine im Vergleich zu Fig. 1 kopfüber angeordnete Alternative mit besonderem Nutzen vorgesehen werden, weil es dabei möglich wird, ein Fluid-Volumen 28 mit hoher Dichte einzusetzen, und insbesondere eine kleinvolumige linsen- oder kugeltömiges Quecksilbermasse vorzusehen, welche sich durch besonders hohe mechanische und optische Dichte-Differenzen auszeichnet. - Die prinzipielle Wahlmöglichkeit, unterschiedliche Transparenzwerte und Brechungsindizes für die Fluid-Volumina 26 und 28 vorzusehen, bleibt bei der nach oben geklappten Alternative erhalten. - Ebenso können die Dichten der beteiligten Fluid-Volumina nach praktischen Erwägungen ausgewählt werden.

Während in Fig. 1 die Wölbung der Oberfläche 24 dafür sorgt, dass das Fluid-Volumen 28 eine eindeutige höchstmögliche Position einnimmt, ist es bei der nach oben geklappten Alternative umgekehrt, da das Fluid-Volumen. 28 dann eine eindeutig definierte, lageabhängige tiefstmögliche Position einnimmt.
Der Krümmungsradius zu Deckfläche 24 ist in Fig. 1 stark überhöht dargestellt.

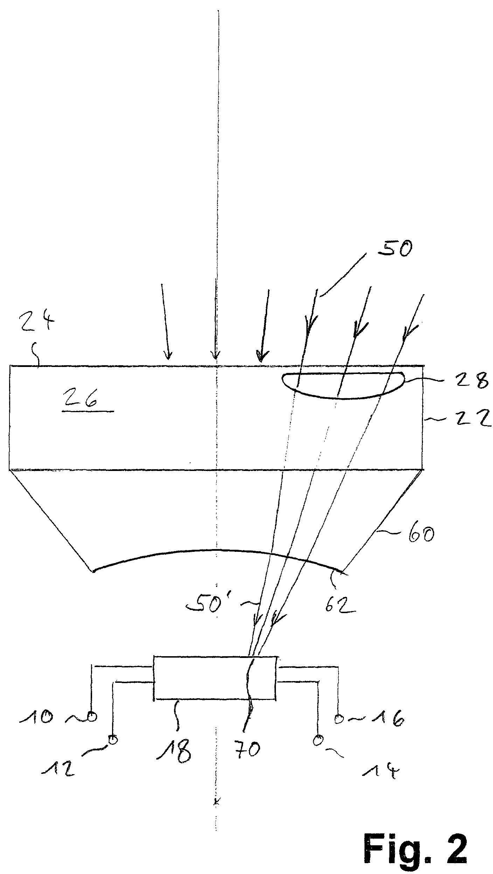

Wie aus Fig. 2 hervorgeht, ist bei den vorgesehenen Krümmungsradien, welche im Meter-Bereich liegen können, die Deckfläche 24 visuell kaum von einer Ebene zu unterscheiden. - Die in Fig. 2 dargestellte Anordnung entspricht also der bereits erwähnten Alternative, den Sensor 18 unterhalb des Gefässes 22 anzuordnen. Gleichzeitig wird die Möglichkeit dargestellt, die Lichtstrahlen 50 konvergent einfallen zu lassen, so dass die fokussierende Wirkung des Fluid-Volumens 28 (mit grösserem Brechungsindex als der des Fluid-Volumens 26) verstärkt wird. Hierzu kann eine Zusatz-Linse 60 vorgesehen sein, zum Beispiel in plankonkaver Ausführung mit konkaver Oberfläche 62. Auf diese Weise erzeugt ein relativ grossvolumiges Fluid-Volumen 28 mittels der konvergierenden Strahlen 50' einen relativ kleinen Bereich 70 mit hoher Lichtintensität. Der gezeigte Fall setzt voraus, dass Fluid-Volumen 28 eher transparent gehalten wird, hingegen Fluid-Volumen 26 eine Einfärbung aufweisen sollte. Für Fluid-Volumen 28 mit hohem Brechungsindex kann vorteilhaft Silikonöl verwendet werden.

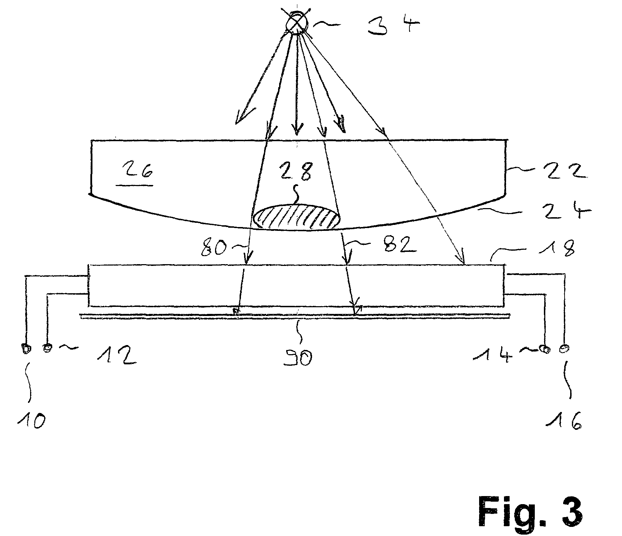

Die in Fig. 3 dargestellte Vorrichtung unterscheidet sich von den im vorhergehenden beschriebenen dadurch, dass auch ein annähernd transparenter optoelektronischer Sensor 18 vorgesehen sein kann, so dass durch diesen hindurchtretende Lichtstrahlen 80, 82 nach Reflexion an einem Planspiegel 90 zu einem stärkeren oder genaueren Ausgangssignal des Sensors 18 beitragen. Darüberhinaus ist dargestellt, wie als schwereres Fluid ein Quecksilbertropfen vorgesehen ist, welcher z.B. in transparentem Silikonöl (Fluid-Volumen 26) auf der konkaven Bodenfläche 24 des Gefässes 22 beweglich positioniert ist und somit als lageabhängige Abschattung für den Sensor 18 dient.

Für die gezeigten Ausführungsformen wird mit Vorteil als optoelektronischer Sensor 18 ein solcher auf CCD-Basis oder auf Basis eines CMOS-Arrays vorgesehen. Mit einem solchen Baustein sind bessere und vielfältigere Möglichkeiten der computermässigen Auswertung hinsichtlich Kennwerten und Koordinaten der flächenmässigen Lichtverteilung möglich. Damit kann auch eine automatisierte Güteabschätzung des Messergebnisses durchgeführt werden. Insbesondere ist es von Vorteil, auch eine visuelle Gütekontrolle des Messergebnisses vornehmen zu können. Hierzu kann eine Bedienperson die durch den Sensor ermittelte Lichtverteilung auf einem zusätzlich vorgesehenen Display (z. B. Monitor eines tragbaren Computers) inspizieren und nach subjektiven Masstäben bewerten, d.h. und im Zweifelsfall das Messergebnis verwerfen.

Das vorgeschlagene Inclinometer wird mit besonderem Vorteil bei der Ausrichtung von Wellen oder Walzen in der Metall- und Papierindustrie sowie bei der Filmherstellung verwendet. In diesem Zusammenhang ist es weiterhin von Vorteil, das obig beschriebene Inclinometer mit einem oder mehreren optisch oder mikromechanisch wirkenden Gyroskopen zu kombinieren, so dass man ein dreidimensional wirkendes Inclinometer erhält. Mit einem solchen ist es möglich, die parallele Ausrichtung von Rollen, Walzen oder dergleichen mit hoher Präzision zu überprüfen. Diese Anwendung ist insbesondere vorteilhaft bei der Uberprüfung von Maschinen und zugehörigen Walzen, wie sie bei der Papier-, Film- und Folienherstellung sowie bei der Herstellung von Feinblechen verwendet werden.

## Patentansprüche

1. Inclinometer zur gleichzeitigen Bestimmung eines ersten und eines zweiten Neigungswinkels relativ zu einer Senkrechten, **gekennzeichnet durch** folgende Merkmale:
- es ist eine Beleuchtungsvorrichtung vorhanden
- es ist ein zweidimensional auslesbarer optoelektronischer Positionsdetektor vorhanden, mit festen Abständen gegenüber der Beleuchtungseinrichtung
- es ist eine zweidimensional wirkende Abschattungs- oder Fokussierungseinrichtung vorhanden, mit festen Abständen gegenüber der Beleuchtungseinrichtung und dem Positionsdetektor
- die Abschattungs- oder Fokussierungseinrichtung weist transparente oder reflektierende Deck- und/oder Bodenschichten auf, von denen mindestens eine gewölbt ist
- innerhalb der Abschattungs- oder Fokussierungseinrichtung befinden sich unvermischbare Volumina eines ersten und eines zweiten Fluids, welche sich in ihrer Dichte (spezif. Gewicht) unterscheiden und welche in vordefinierter Weise nach Massgabe einer aktuellen räumlichen Orientierung des Inclinometers unterschiedliche Positionen einnehmen können
- die Abschattungs- oder Fokussierungseinrichtung bewirkt in Abhängigkeit einer aktuellen räumlichen Orientierung des Inclinometers örtlich variable Beleuchtungsstärken auf dem **durch** die Beleuchtungseinrichtung beleuchteten Positionsdetektor .

2. Inclinometer nach Anspruch 1, **dadurch gekennzeichnet, dass** sowohl das erste als auch das zweite Fluid transparent ist und zumindest eins der Fluidvolumina als optisches Element in Form einer Linse wirksam ist.

3. Inclinometer nach Anspruch 1, **gekennzeichnet durch** mindestens ein eingefärbtes oder undurchsichtiges erstes Fluid und ein transparentes zweites Fluid.

4. Inclinometer nach einem der vorhergehenden Ansprüche, **gekennzeichnet durch** die Kombination zweier der folgenden Fluide: Luft, Stickstoff, Alkohol, Silikonöl, Mineralöl, Wasser, Quecksilber.

5. Inclinometer nach einem der vorhergehenden Ansprüche, **gekennzeichnet durch** eine Beleuchtungseinrichtung zum Erzeugen von konvergenten, divergenten oder diffusen Lichtstrahlen.

6. Inclinometer nach einem der vorhergehenden Ansprüche, **gekennzeichnet durch** ein Gefäss mit nach aussen gewölbter Deck- oder Bodenschicht, wobei der Krümmungsradius der Wölbung grösser als 0,5 m ist.

7. Inclinometer nach einem der vorhergehenden Ansprüche, **gekennzeichnet durch** einen zweidimensional auslesbaren optoelektronischen Sensor, welcher einen integriert hergestellten CCD - oder CMOS- Baustein enthält.

8. Verfahren zur Bestimmung der räumlichen Orientierung eines Körpers nach drei Winkelkoordinaten relativ zur Senkrechten, unter Verwendung eines Inclinometers nach einem der vorstehenden Ansprüche und unter Verwendung eines oder mehrerer optisch oder mikromechanisch wirkender Gyroskope.

9. Verwendung eines Inclinometers nach einem der Ansprüche 1 bis 7, oder Anwendung des Verfahrens nach Anspruch 8, bei der Kontrolle oder Justage von Walzen, die in Maschinen für die Herstellung von Papier, Filmen, Folien oder Blechen angeordnet sind.
